# EUROPEAN PATENT APPLICATION

(11) **EP 4 687 336 A1**
(43) Date of publication of application: **04.02.2026**
(21) Application number: 25192387.6
(22) Date of filing: 29.07.2025
(51) Int. Cl.: H04L 49/901, H04L 49/90, H04L 47/80

(54) **SCALABLE OUTPUT QUEUED ARCHITECTURE WITH DECOUPLED PACKET AND CELL QUEUEING**

(30) Priority: 30.07.2024 US 202418789283
(71) Applicant: Avago Technologies International Sales Pte. Limited, Singapore 768923 (SG)
(72) Inventor: Bansal, Ankit, Irvine, 92618 (US); LakshmyGopalakrishnan, Manoj, Irvine, 92618 (US); Durve, Rahul, Irvine, 92618 (US); Li, Haopeng, Irvine, 92618 (US); Kumar, Arjun, Irvine, 92618 (US)
(74) Representative: Dilg, Haeusler, Schindelmann Patentanwaltsgesellschaft mbH

(57) **Abstract**

A network device with decoupled packet and cell queueing is provided. The network device includes a traffic manager (115) configured to obtain the one or more packets. The traffic manager (115) further includes a packet storage configured to store one or more pointers associated with a packet of the one or more packets, the one or more pointers comprising a first type of pointer and a second type of pointer, and a cell storage configured to store cell control information of at least part of the one or more cells of the packet, wherein the cell control information includes a respective first type of pointer for each of the at least part of the one or more cells. The traffic manager (115) further includes admission control logic (125) configured to perform an admission check of the one or more packets without the cell control information of the one or more packets.

## Description

### COPYRIGHT STATEMENT

A portion of the disclosure of this patent document contains material that is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### FIELD

The present disclosure relates, in general, to methods, systems, and apparatuses for internal packet generation in network switches.

### BACKGROUND

In conventional network switches, incoming packets undergo thresholding operations before they are admitted and written to the buffer. Accessing the admission control state of multiple unique flows simultaneously presents several challenges. Moreover, packets arriving on an ingress port (e.g., a source port) are typically accumulated at a shared batching point. Thus, handling many to one traffic going to a single destination group becomes expensive as data rate increases. Furthermore, enqueued packets are typically stored in a linked list-based queueing structure. The control information for the enqueued packets is stored in a shared storage, while the contexts of each queue are maintained in queue databases. Queuing at high bandwidth presents challenges associated with the number of reads/writes to the shared storage structure, and traversing the linked-list at a high rate.

Accordingly, a scalable output queued architecture with decoupled cell and packet flow is provided.

### BRIEF DESCRIPTION OF THE DRAWINGS

A further understanding of the nature and advantages of particular embodiments may be realized by reference to the remaining portions of the specification and the drawings, in which like reference numerals are used to refer to similar components. In some instances, a sub-label is associated with a reference numeral to denote one of multiple similar components. When reference is made to a reference numeral without specification to an existing sub-label, it is intended to refer to all such multiple similar components.
Fig. 1 is a schematic block diagram of a network switch, in accordance with various embodiments;
Fig. 2 is a schematic block diagram of a traffic manager utilizing a decoupled packet and cell queueing scheme, in accordance with various embodiments;
Fig. 3 is a schematic block diagram illustrating an admission control framework in a scalable output queued architecture with decoupled packet and cell queueing scheme, in accordance with various embodiments; and
Fig. 5 is a hardware block diagram of a computer system for a network switch with scalable output queued architecture with decoupled packet and cell queueing, in accordance with various embodiments.

### DETAILED DESCRIPTION OF EMBODIMENTS

Various embodiments set forth a scalable output queued switch architecture with decoupled packet and cell queueing.

In some embodiments, an apparatus having an output queued architecture with decoupled packet and cell queueing is provided. The apparatus includes one or more ingress points configured to receive one or more packets, each packet comprising a respective one or more cells, and a traffic manager configured to obtain the one or more packets from a buffer. The traffic manager includes a first storage configured to store one or more pointers associated with a packet of the one or more packets, the one or more pointers comprising a first type of pointer and a second type of pointer, and a second storage configured to store the respective cell control information of at least part of the one or more cells of the packet, wherein the cell control information includes a respective first type of pointer for each of the at least part of the one or more cells. The first type of pointer references an address of a location in the buffer where a respective cell of the at least part of the one or more cells is stored. The second type of pointer references an address of a location of the cell storage. The traffic manager further includes an admission control logic configured to perform an admission check of the one or more packets without the cell control information of the one or more packets. Performing the admission check includes determining whether a packet in the buffer should be admitted into a first queue.

In further embodiments, a network device having an output queued architecture with decoupled packet and cell queueing is provided. The network device includes one or more ingress points configured to receive one or more packets, each packet comprising a respective one or more cells, and a memory management unit. The memory management unit includes a traffic manager configured to obtain the one or more packets from a buffer. The traffic manager includes a packet storage configured to store one or more pointers associated with a packet of the one or more packets, the one or more pointers comprising a first type of pointer and a second type of pointer, and a cell storage configured to store cell control information of at least part of the one or more cells of the packet, wherein the cell control information includes a respective first type of pointer for each of the at least part of the one or more cells. The first type of pointer references an address of a location in the buffer where a respective cell of the at least part of the one or more cells is stored. The second type of pointer references an address of a location of the cell storage. The traffic manager includes an admission control logic configured to perform an admission check of the one or more packets without the cell control information of the one or more packets, wherein performing the admission check includes determining whether a packet in the buffer should be admitted into an output queue.

In further embodiments, a memory management unit with decoupled packet and cell queueing is provided. The memory management unit includes a traffic manager to obtain one or more packets from a buffer, each packet comprising a respective one or more cells. The traffic manager includes a packet storage configured to store one or more pointers associated with a packet of the one or more packets, the one or more pointers comprising a first type of pointer and a second type of pointer, and a cell storage configured to store cell control information of at least part of the one or more cells of the packet, wherein the cell control information includes a respective first type of pointer for each of the at least part of the one or more cells. The first type of pointer references an address of a location in the buffer where a respective cell of the at least part of the one or more cells is stored. The second type of pointer references an address of a location of the cell storage. The traffic manager includes an admission control logic configured to perform an admission check of the one or more packets without the cell control information of the one or more packets, wherein performing the admission check includes determining whether a packet in the buffer should be admitted into an output queue.

In the following description, for the purposes of explanation, numerous details are set forth to provide a thorough understanding of the described embodiments. It will be apparent to one skilled in the art, however, that other embodiments may be practiced without some of these details. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features.

When an element is referred to herein as being "connected" or "coupled" to another element (which includes mechanically, electrically, or communicatively connecting or coupling), it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

When an element is referred to herein as being "disposed" in some manner relative to another element (e.g., disposed on, disposed between, disposed under, disposed adjacent to, or disposed in some other relative manner), it is to be understood that the elements can be directly disposed relative to the other element (e.g., disposed directly on another element), or have intervening elements present between the elements. In contrast, when an element is referred to as being "disposed directly" relative to another element, it should be understood that no intervening elements are present in the "direct" example. However, the existence of a direct disposition does not exclude other examples in which intervening elements may be present.

Moreover, the terms left, right, front, back, top, bottom, forward, reverse, clockwise and counterclockwise are used for purposes of explanation only and are not limited to any fixed direction or orientation. Rather, they are used merely to indicate relative locations and/or directions between various parts of an object and/or components.

Furthermore, the methods and processes described herein may be described in a particular order for ease of description. However, it should be understood that, unless the context dictates otherwise, intervening processes may take place before and/or after any portion of the described process, and further various procedures may be reordered, added, and/or omitted in accordance with various embodiments.

Unless otherwise indicated, all numbers used herein to express quantities, dimensions, and so forth should be understood as being modified in all instances by the term "about." In this application, the use of the singular includes the plural unless specifically stated otherwise, and use of the terms "and" and "or" means "and/or" unless otherwise indicated. Moreover, the use of the terms "including" and "having," as well as other forms, such as "includes," "included," "has," "have," and "had," should be considered non-exclusive. Also, terms such as "element" or "component" encompass both elements and components comprising one unit and elements and components that comprise more than one unit, unless specifically stated otherwise.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

In conventional network switches, incoming packets undergo thresholding operations before they are admitted and written to the buffer. Accessing the admission control state of multiple unique flows simultaneously presents several challenges. Moreover, packets arriving on an ingress port (e.g., a source port) are typically accumulated at a shared batching point. Thus, handling many to one traffic going to a single destination group becomes expensive as data rate increases.

Enqueued packets are usually stored in a linked-list based queueing structure. The control information for the enqueued packets is stored in a shared storage, while the contexts of each queue are maintained in queue databases that are indexed using the queue number. Queuing at high bandwidth presents challenges associated with the number of reads/writes to the shared storage structure and traversing the linked list at a high rate to allow the highest port speed to maintain its throughput during dequeue.

An output queued traffic manager is provided, having decoupled packet and cell queueing. Specifically, an output queued switch architecture allows for performance advantages related to fair access to an egress port from all sources in a switch device. Provisioning a high unique event rate poses a challenge towards the feasibility and scalability in building control paths in the output queued switches. The event rate also needs to be handled with higher efficiency rates of transfer, to limit the latency for the enqueue transfers. Hierarchical grouping of packets from the source to destination port domain allows scaling of this architecture, depending on the total number of ports, datapath and bandwidth requirements, with additional grouping stages able to be added. As only packet control flows through the transfer process, efficient transfers can be promoted in the arbitration process for the transfers, as decoupled from cell control information.

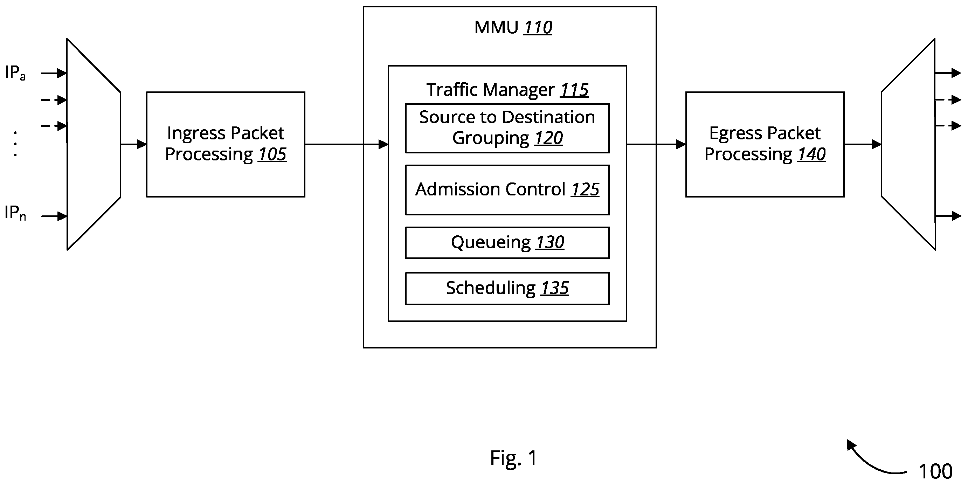

Fig. 1 is a schematic block diagram of a network switch 100, in accordance with various embodiments. The network switch 100 (referred to hereinafter simply as "switch") includes one or more ingress points IPₐ - IPₙ, ingress packet processing 105, memory management unit (MMU) 110, traffic manager 115, source to destination grouping 120, admission control 125, queueing 130, scheduling 135, and egress packet processing 140, which may output traffic to one or more egress points. It should be noted that the various elements of the switch 100 are schematically illustrated in Fig. 1, and that modifications to the various components and other arrangements of the switch 100 may be possible and in accordance with the various embodiments.

In various embodiments, the switch 100 is a network device configured to receive and forward packets to one or more respective destination nodes. In other embodiments, a different network device may be utilized, such as a router, hub, gateway (e.g., a residential gateway (RG)), or access point (AP), configured to provide switching functionality. Thus, a network device, as used herein, may refer to a device on a computer network through which communication between devices (e.g., a host device and a destination device) is facilitated. While "switch" and "switching" are used herein in reference to packet switching functionality, it is to be understood that the terms "switch" and "switching" may, in various embodiments, further include "routers" and "routing" functionality. As previously described, switching may refer generally to the process of receiving packets and forwarding those packets to a respective destination. For example, a network switch may forward traffic based on a layer 2 address (such as a media access controller (MAC) address). A router may, in various examples, function as a network switch. Furthermore, the router may route packets based on a layer 3 address (e.g., an internet protocol (IP) address), and according to a routing table. Moreover, while various examples refer to packets, it should be understood that in other embodiments, other types of protocol data units (PDU) may be utilized, such as, without limitation, cells, frames, datagrams, bridge PDUs, MAC PDUs, segments, bits, symbols, etc.

In various examples, the switch 100 may include one or more ingress points IPₐ - IPₙ, where IPₐ is a first ingress point, and IPₙ is the n-th ingress point (where n is an integer) of the switch 100. An ingress point, as used herein, refers to a location where external data (e.g., external packets) enter a network device, such as the switch 100. In some examples, an ingress point may be associated with a respective port of the switch. In some examples, each ingress point may further be associated (e.g., mapped) to a respective MAC address (e.g., a respective device having a respective MAC address) from which an external packet originates. The switch 100 may similarly include one or more egress points EPₐ - EPₙ, where EPₐ is the first egress point and EPₙ is the n-th egress point. An egress point, as used herein, refers to a location where data exits a network device, such as switch 100. Like the ingress point, in some examples, the egress point may be associated with a respective port of the switch. In some examples, a respective ingress point and egress point may share a respective port of the switch. For example, in some embodiments, a first ingress point IPₐ and first egress point EPₐ may share the same respective port of the switch 100, and so on through the n-th ingress point IPₙ and n-th egress point EPₙ.

In various examples, the switch 100 may include one or more processors, DSP, application specific IC (ASIC), FPGA or other programmable logic, or other processing circuit configured to process and implement packet switching functions, such as the MMU 105, according to logic such as ingress packet processing 105, traffic manager 115, source to destination grouping 120, admission control 125, queueing 130, scheduling 135, and/or egress packet processing 140.

Traffic may be received by the switch 100 via the one or more ingress points IPₐ - IPₙ. In some examples, traffic received at the one or more ingress points IPₐ - IPₙ may be combined into a common data stream for processing via ingress packet processing 105 and/or processing by the MMU 110. For example, the MMU 110 may process and store the received traffic in memory (external or internal), such as a buffer, and further retrieve data stored in memory to be transmitted. Ingress packet processing 105 may be configured to process the ingress traffic for further processing by the MMU. Thus, in various examples, the ingress packet processing 105 may include logic configured to process traffic received from the one or more ingress points IPₐ - IPₙ.

Logic, as used herein, may be implemented in hardware, software, or a combination of hardware and software (including firmware). Suitable hardware may include one or more processors, digital signal processors (DSP), a custom integrated circuit (IC), programmable logic (such as a field-programmable gate array (FPGA), and/or discrete logic).

Accordingly, in various examples, the ingress packet processing 105 may be implemented as software executed on the hardware of the switch 100, such a processor, DSP, application-specific IC (ASIC), FPGA, or in some further examples, by the MMU 110. In various embodiments, ingress packet processing 105 may include processing of the packet for later transmission. For example, ingress packet processing 105 may include determining an egress point EPₐ - EPₙ, or corresponding port of the switch 100, that the packet should be sent through. This may include parsing header information to determine a MAC address (or other address, such as an IP address), and determining a respective port through which the data is to be transmitted. In some examples, determining the respective port through which the data is to be transmitted includes looking up address information (e.g., MAC address, IP address, etc.) in a switching and/or routing table.

In some further examples, ingress packet processing 105 may further include reading and/or modifying the packet, classifying packet, changing packet behavior, modifying or adding header information (e.g., packet header, frame header, etc.), encapsulating a packet for transmission, replicating a packet, changing packet type, storing the packet in a buffer, or other modification of the packet.

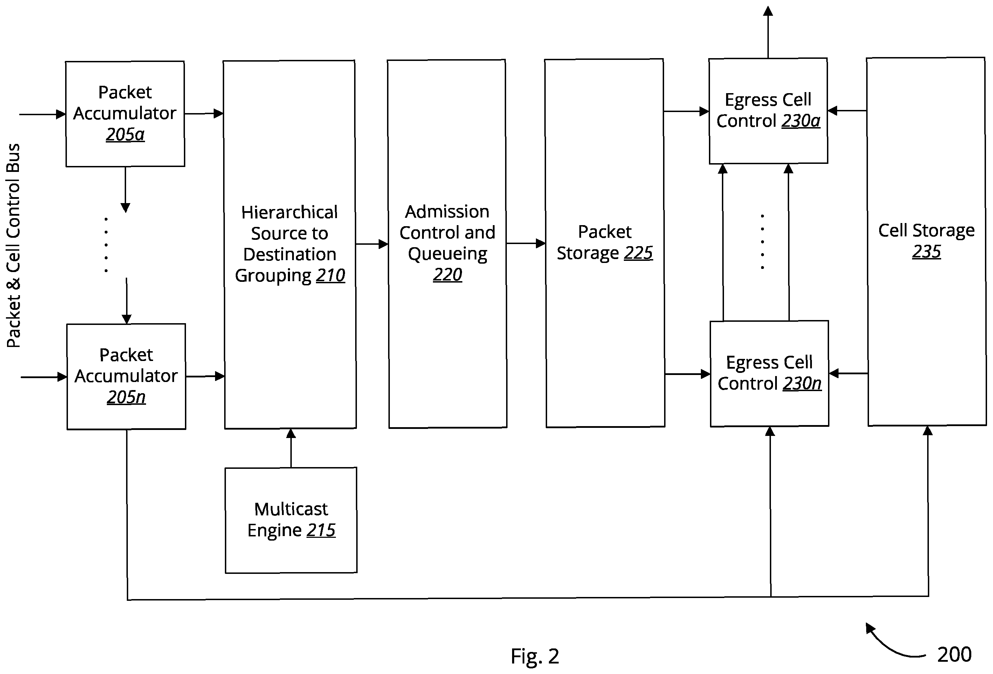

In various examples, the received, ingress packet may further be processed for storage in memory by MMU 110. Thus, processed ingress packets output by ingress packet processing 105 may be obtained by the MMU 110 for further processing. In various embodiments, the MMU 110 includes a traffic manager (TM) 115, which further includes source to destination grouping 120, admission control 125, queueing 130, and scheduling 135. As previously described, the MMU 110 may include hardware such as a processor or other circuitry that is configured to handle memory storage operations (such as access, read, and/or write operations to memory), manage an ingress data buffer, egress data buffer, admission control, queueing, and scheduling, as described in greater detail below with respect to Fig. 2 with respect to the TM 115.

The TM 115 is a component of a switch 100 that handles memory access and storage of ingress traffic, storage of data within a buffer including buffer access control, enqueueing of received packet data into respective logical queues, and dequeuing of packet data, among other functions. In various examples, the TM 115 may be logic implemented within the MMU 110. In other examples, the TM 115 may be dedicated logic, separate from the MMU 110. Accordingly, the TM 115 may be a component of a switch 100 that serves various functions for managing ingress data, and controlling how the data is stored / retrieved. In various embodiments, the TM 115 may include respective logic for handling the packets received by the switch 100. For example, in some embodiments, the TM 115 may include packet accumulation, allocation of data storage pointers, source to destination grouping 120, admission control 125, queueing 130, scheduling 135, etc. The TM 115 may further include ingress and/or egress buffers for storing packets. Pointers (or "memory pointers"), as used herein, is an object that refers to a memory address. Different types of pointers are set forth below, such as a cell storage pointer, buffer pointer, etc. A cell storage pointer, as described below, refers to a memory address of an entry of a cell storage block. A buffer pointer refers to a memory address of a location within the buffer.

With each new generation of network switching solutions, the trend has generally been a doubling of throughput capacity of the TM 115. An output queued TM 115 is set forth, in which packet and cell control operations are decoupled (e.g., handled independently by the TM 115). Specifically, in various embodiments, the control path of the TM 115 comprises separate packet control switching and cell control switching components, as will be described in greater detail with respect to Fig. 2.

In various examples, the source to destination grouping 120 may be implemented as logic within the TM 115, configured to group packets into "blocks" of packets, based on a destination port (or a set of destination ports) of the switch 100. For example, in some embodiments, at a first stage, individual packets received at one or more ingress ports may be accumulated and sorted into one or more blocks based on respective destination ports of the packets. In some examples, the source to destination grouping 120 logic may include one or more grouping stages, in which at each stage, blocks from a previous stage may be transformed into larger blocks. In some examples, two or more blocks may be transformed into a larger block, thereby comprising packets associated with a set of two or more respective destination ports (such as a range of ports, or other set of ports). For example, at a first stage, packets may be converted into one or more first blocks having a first size (e.g., a block of size "A" may be a block of an *A*-number of packets, where *A* is an integer). At a second stage, one or more second blocks having a second size are formed. Each respective second block may be formed from one or more first blocks. Thus, in one example, second block may have a block size "B," comprising a *B*-number of packets, where *B* is an integer greater than *A*. In some further examples, additional stages may be implemented based on factors such as the total number of ports, datapath and bandwidth requirements, etc.

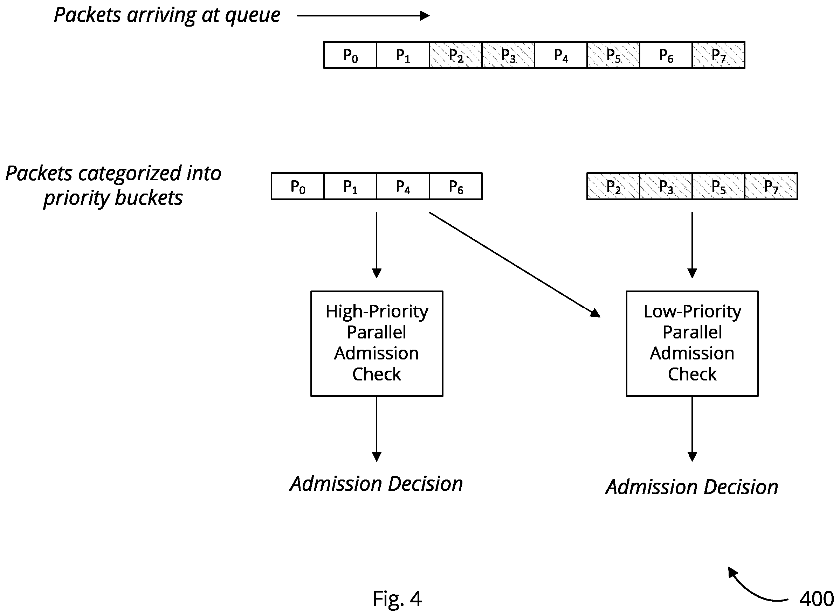

Packets switching through the TM 115 are queued before being scheduled (e.g., via scheduling 135) to the destination port. Accordingly, in various examples, admission control 125 is configured to admit and/or drop packets based on the packet priorities and the state of shared packet storage. In various embodiments, admission control 125 may similarly be implemented in logic, and configured to determine whether a packet should be allowed into a packet buffer (or discarded) based on various factors, such as buffer fullness (e.g., how full the egress packet buffer is), and sharing of ports and/or queues (e.g., egress queues). Accordingly, the admission control 125 may allow packets to be placed into the buffer. In various examples, admission determinations may be made based on groupings and/or blocks, as will be described in greater detail below with respect to Figs. 2 & 4.

Data allowed by admission control logic 125 may then be enqueued via queueing 130. In various embodiments, queueing 130 may be implemented in logic configured to enqueue data from the packet buffer into one or more output queues (also referred to as "egress queues," or "logical queues"). For example, in some embodiments, packets in the packet buffer may be linked together and grouped into output queues of respective ports. For example, each port (or respective egress point) may have one or more logical queues. Packets may be enqueued into a respective queue of the one or more logical queues by the queueing 130 logic. Output queues may refer to a queues that store packets for transmission to a destination port (or one or more destination ports). Each destination port may be associated with a respective output queue, or a respective set of one or more output queues. In some examples, output queues may include virtual output queues (VoQ).

Queueing 130 logic may further be configured to dequeue packets from the respective one or more logical queues based on an arbitration scheme. Accordingly, in various examples, the queueing 130 logic may be configured to enqueue packets from the packet buffer into respective logical queues, and dequeue packets from the one or more logical queues for output. Logical queues, as used herein, refers to queues that are categorized based on properties, such as priority, order of arrival, destination address (or range of destination addresses), multicast or unicast requirements, destination or source ports, etc.

Data (e.g., cells or packets) associated with packets for transmission may then be scheduled, via scheduling 135, for output and processing (via egress packet processing 140). As above, scheduling 135 may be implemented as logic, and configured to determine a sequence in which packets are dequeued, and a packet is selected for transmission (e.g., egress). Thus, in some examples, the scheduling 135 logic may be configured to determine an order in which packets are dequeued, selected from a packet buffer, and transmitted. Accordingly, in various embodiments, scheduling may refer to the process of scheduling packets based on various criteria, such as priority, fairness, performance metrics (such as latency, throughput, etc.), or based on an arbitration scheme, such as, without limitation, first-in first-out (FIFO), priority (such as strict priority), round robin (including weighted round robin), etc.

Accordingly, dequeuing refers to the process of removing a packet that was stored in the respective queue for transmission by the switch to a destination (via a respective egress point / port). Dequeuing further ensures that packets are transmitted in the correct order (e.g., via scheduling 135), as described above.

Packets may then be retrieved from storage by the MMU 110 (e.g., TM 115) and placed in an egress buffer for further processing via egress packet processing 140, and output by switch 100. Like ingress packet processing 105, egress packet processing 140 may include logic for reading and/or modifying the packet, classifying packet, changing packet behavior, modifying or adding header information (e.g., packet header, frame header, etc.), encapsulating a packet for transmission, replicating a packet, changing packet type, storing the packet in a buffer, or other modification of the packet for downstream output.

Fig. 2 is a schematic block diagram of a TM 200 utilizing a decoupled packet and cell queueing scheme, in accordance with various embodiments. The TM 200 includes one or more packet accumulators 205a - 205n, hierarchical source to destination grouping logic 210, multicast engine 215, admission control and queueing logic 220, packet storage logic 225, cell storage logic 235, and one or more It should be noted that the various elements of the TM 200 are schematically illustrated in Fig. 2, and that modifications to the various components and other arrangements of the TM 200 may be possible and in accordance with the various embodiments.

In various embodiments, control information associated with each cell (cell control information) and each packet (packet control information) may be handled separately. A cell, as used herein, refers to a fixed-size unit of data. Cell control information, accordingly, includes address information (e.g., storage pointers) indicating where packet data associated with the cell is stored in a buffer (such as cell storage 235) or other storage structure. In contrast, a packet may have variable length, and may be segmented into one or more cells. For example, in some embodiments, a packet may be segmented into start of packet (SOP) cells, middle of packet (MOP) cells, and end of packet (EOP) cells. Packet control information may include properties of the packet, such as, without limitation, source port number, destination port number, queue number, packet type (e.g., replicated multicast packets, notification packets, network instrumentation packets, spanning tree protocol (STP) packets, ARP packets, link layer discovery protocol (LLDP) packets, internet control message protocol (ICMP) packets, simple network management protocol (SNMP) packets, etc.), packet size, packet priority, etc.

Depending on packet sizes in the network, average packet rate may be lower than the cell rate through the TM 200. Including cell control information of a packet in each of the packet processing functions of the TM 200 (such as packet accumulation, hierarchical source to destination grouping 210, admission control and queueing 220, scheduling, etc.) adds to computational overhead and increased storage requirements. Accordingly, cell control functions and packet control functions may be decoupled in various embodiments, such that operations that do not require cell information can be processed at a lower processing rate (e.g., the packet processing rate), while cell control information is stored in the separate cell storage 235.

For example, in some embodiments, packet buffer allocation, packet accumulation, and issuing reads to the buffer may be performed at cell rates. The cell control information may be stored in separate cell storage 235, while packets undergo packet processing, such as hierarchical source to destination grouping 210, admission control and queueing 220 (including scheduling), etc. The separation and merging of cell / packet flows, as will be set forth in greater detail below, may be handled to ensure throughput and ordering of traffic is maintained for all packet sizes.

In a TM 200 utilizing a decoupled packet and cell queueing scheme, packets received via the switch (e.g., via ingress points IPₐ - IPₙ) may be accumulated via the one or more packet accumulators 205a - 205n. The one or more packet accumulators 205a-205n may, for example, act as a source of accumulated ingress packets and/or respective control information associated with the accumulated ingress packets (received via a packet and cell control bus) that have been initially grouped together (e.g., by source port). In some examples, the one or more packet accumulators may each respectively be a buffer (e.g., an ingress buffer) or FIFO. In some examples, each of the one or more packet accumulators 205a - 205n may be configured to store ingress packets received at a respective ingress point IPₐ - IPₙ (or a respective source).

As previously described, each of the packets may include one or more cells. Memory pointers for all cells are stored and retrieved for every packet. Traditional approaches to pointer management include storing memory pointers for each cell along with packet information, or creating a linked list of memory pointers. Storing memory pointers for each cell for all packets is costly in terms of writing and storage. In the linked list approach, a head pointer of the linked list is carried along with packet control information. When the packet is dequeued, the linked list is traversed to read all cells of the packet, which is similarly inefficient and costly in terms of bandwidth and area overhead.

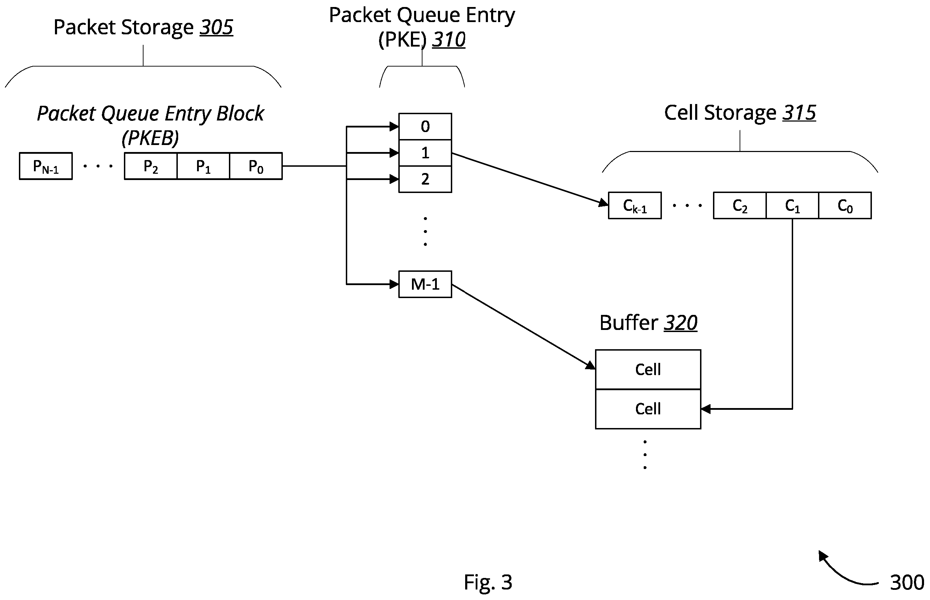

Accordingly, in various embodiments, decoupled management of memory pointers is provided. For example, in memory pointers may be managed by using grouping and indirection techniques to separately store and read cells, as will be described in greater detail below with respect to Fig. 3.

Each of the packet accumulators 205a - 205n may then provide a respective one or more ingress packets for packet forwarding or further along the packet control path, without the additional overhead of cell control information. For example, packet processing that does not utilize cell control information may be performed at a lower processing rate, without the overhead and cost of cell control information retrieval. Thus, some packet processing may be performed, without the cell control information, such as hierarchical source to destination grouping 210 and admission control and queueing 220 (including enqueueing, dequeuing, and scheduling). However, in some examples, functions that occur at cell rate, such as buffer pointer allocation, packet accumulation, and buffer reads, are performed with the cell control information (e.g., cell control information is retrieved from cell storage 235).

In some embodiments, a multicast engine 215 may also provide internally generated multicast packets for grouping via hierarchical source to destination grouping 210. For example, multicast engine 215 may replicate one or more multicast packets for grouping into one or more groups by hierarchical source to destination grouping 210. Like the ingress packets above, multicast packets may similarly have cell control information independently managed from the packet control information.

As previously described, the hierarchical source to destination grouping 210 may include logic configured to group the packets from the one or more packet accumulators into "blocks" of packets, based on a destination port or set of destination ports of respective packets (or destination address). For example, in some embodiments, at a first stage, individual packets received at one or more ingress ports may be accumulated and sorted into one or more blocks based on respective destination ports of the packets. In some examples, the hierarchical source to destination grouping 210 logic may include one or more grouping stages, in which at each stage, blocks from a previous stage may be transformed into larger blocks (e.g., comprising packets associated with a set of two or more destination ports as previously described). In some further examples, additional stages may be implemented based on factors such as the total number of ports, datapath and bandwidth requirements, etc.

For example, at a first stage, packets may be converted into one or more first blocks having a first size (e.g., a block of size "A" may be a block of an *A-*number of packets, where *A* is an integer). At a second stage, one or more second blocks having a second size are formed. Each respective second block may be formed from one or more first blocks. Thus, in one example, the second block may have a block size "B," comprising a *B*-number of packets, where *B* is an integer greater than *A*.

As previously described, admission control and queueing logic 220 may include packet processing functions such as admission control, enqueueing, dequeuing, and scheduling. Packets switching through the TM 200 are enqueued before being scheduled to the destination port. The data storage, such as packet storage 225 and cell storage 235, and respective control queues are a shared and managed resource. Admission control logic is responsible to admit/drop packets based on the packet priorities and the state of the shared storage, as set forth in greater detail below with respect to Fig. 4.

In various examples, admission control may include logic configured to admit and/or drop packets based on the packet priorities and the state of shared packet storage. In various embodiments, admission control may similarly be implemented in logic, and configured to determine whether a packet should be allowed into a packet buffer (or discarded) based on various factors, such as the state of the shared resources (e.g., queue/buffer fullness, sharing of ports and/or queues, etc.). In further examples, admission determinations may be made based on groupings and/or blocks, packet priorities, etc. Accordingly, the admission control may allow packets to be placed into the buffer based on different factors.

Queueing and scheduling may similarly be implemented as part of admission control and queueing logic 220. Queueing, as previously described, may be logic configured to from packet storage 225 (e.g., a packet buffer), into one or more output queues (also referred to interchangeably as "egress queues," or "logical queues"). For example, in some embodiments, packets in the packet buffer may be linked together into output queues of a given port. For example, each port (or respective egress point) may have one or more logical queues.

Queueing logic may further be configured to dequeue packets from the respective one or more logical queues, and scheduled for transmission (e.g., via scheduling logic) based on an arbitration scheme as previously described.

Packet storage 225, as previously described, may include a packet buffer and/or storage within memory for storing packet data (including packet control information). Cell storage 235, as previously described may similarly include a cell buffer and/or storage within memory for storing cells (including cell control information). Egress cell control 230a - 230n may include one or more respective output queues, as described above, egress of packet data, and more specifically, the respective one or more cells of a packet (or packets) for egress.

Fig. 3 is a schematic block diagram illustrating a framework 300 for memory pointer management in a scalable output queued architecture with decoupled packet and cell queueing scheme, in accordance with various embodiments. As previously described, memory pointers for each cell of a packet are retrieved for each packet. The framework 300 provides for grouping and indirection techniques for storing and retrieving memory pointers for cells.

According to various embodiments, respective cell data of a packet is stored in the buffer 320. A respective memory pointer may be stored as part of a cell storage block of cell storage 315. In various embodiments, a cell storage block may be configured to store a K-number of memory pointers, where K is an integer, with each memory pointer pointing to a location in the buffer 320 for a respectively associated cell. Memory pointers pointing to a location in the buffer 320 may be referred to, hereinafter, as "buffer pointers." The buffer 320 may be an output

In various embodiments, up to an *M*-number of pointers may be stored in a packet queue entry (PKE) 310, where *M* is an integer. These pointers could be cell storage pointers (e.g., indirection) or buffer pointers (e.g., direct). For packet sizes up to an *M*-number of cells, all pointers in the PKE 310 may be buffer pointers, with no pointers to cell storage 315. For packet sizes larger than an *M*-number of cells, a combination of cell storage pointers and buffer pointers may be carried along with the packet control information. Cell storage pointers are pointers to a cell storage block, or in some examples, locations within the cell storage block. Accordingly, in some examples, a cell storage block may include buffer pointers for one or more cells of a respective packet. In some examples, the one or more cells may include a range of cells, or other subset of cells of the respective packet. Accordingly, packet control information for a respective packet may be stored in the packet storage 305 as a respective entry (e.g., PKE 310) of the PKE block (PKEB).

In various examples, the PKEB, PKE 310, and/or cell storage block may be referred to as "control queues." Control queues, as used herein, are queues configured to store control information, which in this example, includes packet control information (e.g., a "packet control queue") and cell control information (e.g., a "cell control queue").

In various examples, for a block of an *N*-number of packets, respective packet control information may be stored as a block of PKEs in the packet storage 305, where N is an integer. The block of PKEs may be referred to as a packet queue entry block (PKEB), which is stored in the packet storage 305. In some examples, packets belonging to the same queue may be grouped together, as set forth above with respect to hierarchical source to destination grouping. Accordingly, in some embodiments, each block may correspond to a block of packets grouped together as previously described.

The block size N may be determined based, at least in part, on the rate of dequeue and linked list traversal. The size of *K* (e.g., cell storage block of cell storage 315) and *M* (e.g., size of the PKE 310) may be determined based, at least in part, on size / area for respective packet storage 305 and cell storage 315 structures, and wiring cost of the cell storage 315.

Fig. 4 is a schematic block diagram illustrating an admission control framework 400 for access control in a scalable output queued architecture with decoupled packet and cell queueing scheme, in accordance with various embodiments. As previously described, the admission control framework 400 illustrates a parallel admission check utilizing priority buckets.

Each queue, such as control queues (e.g., PKEB, cell storage block, etc.) or logical queues (e.g., output queues) typically have a guaranteed storage and a shared portion. As the queues are typically a shared resource, the admission control logic may, in some examples, check resource availability (e.g., queue capacity, bandwidth, etc.) before a packet is admitted. Typical approaches that utilize approximations of these checks may lead to undershoot or overshoot, which may further lead to reliance on extra buffer space.

The admission control framework 400 implements an elastic pipeline to perform admission checks that is configured to avoid undershoot / overshoot of thresholding (e.g., queue fullness of the guaranteed resources before shared resources are used). An elastic pipeline, as used herein, refers to a processing and/or hardware pipeline that is scalable and to which resources may be dynamically allocated. Specifically, the proposed framework 400 divides thresholding operations into multiple clock cycles. Thresholding may refer to, for example, performing an admission check based on thresholds such as a queue length threshold, buffer utilization, traffic prioritization (e.g., quality of service (QoS) or service level agreement (SLA) thresholds for traffic), rate limiting thresholds (e.g., traffic thresholds or limits), etc. In the context of the examples below, thresholding includes a check for resources dedicated to a corresponding respective queue (e.g., queue fullness for a port), and a check for shared resources for the respective queue.

In various examples, thresholding operations may be split into multiple clock cycles, as will be described in greater detail below. For example, thresholding may be completed before the arrival of the next set of packets to be enqueued. In some embodiments, packets to be enqueued to a given queue across multiple cycles may be grouped as a single block. A group of packets takes multiple cycles to complete the admission check process. Thus, grouping the packets into multiple batches across cycles ensures that no new packets will arrive for enqueueing to the same queue within a given window of the admission check.

In various embodiments, packets arriving across multiple clock cycles may be batched together such that new requests to the same queue are spaced apart by an amount of time that corresponds to the amount of time taken by the admission check engine to perform the admission check.

In various examples, the packets switching through the traffic manager are buffered in the output queues. The packets flowing through a queue may belong to different priority buckets. Accordingly, in some embodiments, packets arriving at a queue may be grouped into separate buckets, such as, for example, a high-priority bucket and a low-priority bucket. The queue limits for high-priority packets are typically larger than those for low-priority packets. Each output queue can receive multiple packets from different input ports.

In some embodiments, an output queue admission controller (e.g., an admission check engine) may be configured to manage a maximum length of each queue. For example, the output queue admission controller may make an admission decision for each packet based, at least in part, on a packet priority and queue length.

In some further embodiments, each queue may have access to two types of resources: guaranteed resources and shared resources. Guaranteed resources are consumed ahead of shared resources. While serial admission of packets into the queue can optimize queue utilization (e.g., eliminate overshoot or undershoot of maximum queue length), a serial admission scheme for packets arriving in a single cycle poses timing challenges. Accordingly, various techniques are further introduced to the admission check of packets to achieve similar performance as the serial admission check.

As previously described, arriving packets (also referred to as "incoming packets") may be categorized into respective priority buckets (such as "high priority" and "low priority"). For packets within the same priority bucket, admission check may be performed in parallel for all packets within the bucket. In some examples, packets belonging to the same bucket may further be of the same type (e.g., packet type).

In some embodiments, to make an admission decision, a prefix-sum of the packet length may be computed using a very optimal prefix sum adder circuit (e.g., Koggle-Stone). Each packet's respective prefix-sum is checked against available space in a respective queue to finalize the admission decision. In some embodiments, an admission check may be made for packets in the low priority bucket based, at least in part, on a total number of packets (or alternatively, length of packets in the high priority bucket). For example, a total length of packets within the high priority bucket may be used to determine queue fullness (e.g., availability of resources/space dedicated to the queue and/or shared resources/space available to the queue) to determine whether to allow packets in the low priority bucket. In some examples, admission checks of packets in the low priority bucket may be performed concurrently with admission checks of packets in the high priority bucket.

In some further examples, admission control of a packet may further include an admission check against shared resources and guaranteed resources, as previously described. For example, in some situations, shared resource available for all queues within a port may be oversubscribed (e.g., the shared resource available for the port may be fully utilized by one or a subset of queues of the port). Therefore, an admission check of an incoming packet may be performed at both the queue and the port level.

In some examples, this "two-level" admission check may be performed over two or more clock cycles (e.g., a queue-level admission check may be performed over one or more cycles, and a port-level admission check may be performed over one or more cycles). In some embodiments, for example, a "queue-level" admission check based on the resources dedicated to a respective queue (e.g., guaranteed resources) may be performed during a first cycle. A "port-level" admission check of the remaining packets against the shared resource may be performed in the next cycle. Accordingly, in some examples, the admission check may be split into multiple cycles and completed before the arrival of a subsequent set of packets destined for the same queue. In some further examples, packets destined to the same queue across multiple cycles may be batched as a single group, for which an admission check may be performed over multiple cycles. In some examples, grouping may be configured to ensure no new packets destined for the same queue arrive within the window of cycles over which packets are batched.

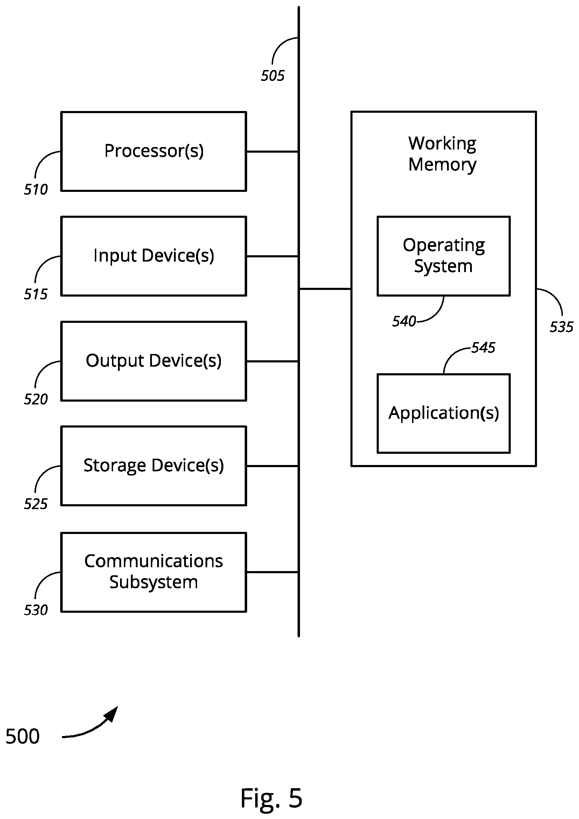

Fig. 5 provides a schematic illustration of one embodiment of a computer system 500, such as the switch 100, or subsystems thereof, such as the MMU 110, TM 115, 200, and IQE 120, 205, 300, or combinations thereof, which may perform the methods provided by various other embodiments, as described herein. It should be noted that Fig. 5 only provides a generalized illustration of various components, of which one or more of each may be utilized as appropriate. Fig. 5, therefore, broadly illustrates how individual system elements may be implemented in a relatively separated or relatively more integrated manner.

The computer system 500 includes multiple hardware elements that may be electrically coupled via a bus 505 (or may otherwise be in communication, as appropriate). The hardware elements may include one or more processors 510, including, without limitation, one or more general-purpose processors and/or one or more special-purpose processors (such as microprocessors, digital signal processing chips, graphics acceleration processors, and microcontrollers); one or more input devices 515, which include, without limitation, a mouse, a keyboard, one or more sensors, and/or the like; and one or more output devices 520, which can include, without limitation, a display device, and/or the like.

The computer system 500 may further include (and/or be in communication with) one or more storage devices 525, which can comprise, without limitation, local and/or network accessible storage, and/or can include, without limitation, a disk drive, a drive array, an optical storage device, solid-state storage device such as a random-access memory ("RAM") and/or a read-only memory ("ROM"), which can be programmable, flash-updateable, and/or the like. Such storage devices may be configured to implement any appropriate data stores, including, without limitation, various file systems, database structures, and/or the like.

The computer system 500 might also include a communications subsystem 530, which may include, without limitation, a modem, a network card (wireless or wired), an IR communication device, a wireless communication device and/or chipset (such as a Bluetooth^{™} device, an 802.11 device, a WiFi device, a WiMax device, a WWAN device, a Z-Wave device, a ZigBee device, cellular communication facilities, etc.), and/or an LP wireless device as previously described. The communications subsystem 530 may permit data to be exchanged with a network (such as the network described below, to name one example), with other computer or hardware systems, between data centers or different cloud platforms, and/or with any other devices described herein. In many embodiments, the computer system 500 further comprises a working memory 535, which can include a RAM or ROM device, as described above.

The computer system 500 also may comprise software elements, shown as being currently located within the working memory 535, including an operating system 540, device drivers, executable libraries, and/or other code, such as one or more application programs 545, which may comprise computer programs provided by various embodiments, and/or may be designed to implement methods, and/or configure systems, provided by other embodiments, as described herein. Merely by way of example, one or more procedures described with respect to the method(s) discussed above might be implemented as code and/or instructions executable by a computer (and/or a processor within a computer); in an aspect, then, such code and/or instructions can be used to configure and/or adapt a general-purpose computer (or other device) to perform one or more operations in accordance with the described methods.

A set of these instructions and/or code might be encoded and/or stored on a non-transitory computer-readable storage medium, such as the storage device(s) 525 described above. In some cases, the storage medium might be incorporated within a computer system, such as the system 500. In other embodiments, the storage medium might be separate from a computer system (i.e., a removable medium, such as a compact disc, etc.), and/or provided in an installation package, such that the storage medium can be used to program, configure, and/or adapt a general purpose computer with the instructions/code stored thereon. These instructions might take the form of executable code, which is executable by the computer system 500 and/or might take the form of source and/or installable code, which, upon compilation and/or installation on the computer system 500 (e.g., using any of a variety of generally available compilers, installation programs, compression/decompression utilities, etc.) then takes the form of executable code.

It will be apparent to those skilled in the art that substantial variations may be made in accordance with specific requirements. For example, customized hardware (such as programmable logic controllers, single board computers, FPGAs, ASICs, and SoCs) might also be used, and/or particular elements might be implemented in hardware, software (including portable software, such as applets, etc.), or both. Further, connection to other computing devices such as network input/output devices may be employed.

As mentioned above, in one aspect, some embodiments may employ a computer or hardware system (such as the computer system 500) to perform methods in accordance with various embodiments of the invention. According to a set of embodiments, some or all of the procedures of such methods are performed by the computer system 500 in response to processor 510 executing one or more sequences of one or more instructions (which might be incorporated into the operating system 540 and/or other code, such as an application program 545) contained in the working memory 535. Such instructions may be read into the working memory 535 from another computer-readable medium, such as one or more of the storage device(s) 525. Merely by way of example, execution of the sequences of instructions contained in the working memory 535 might cause the processor(s) 510 to perform one or more procedures of the methods described herein.

In an embodiment implemented using the computer system 500, various computer-readable media might be involved in providing instructions/code to processor(s) 510 for execution and/or might be used to store and/or carry such instructions/code (e.g., as signals). In many implementations, a computer-readable medium is a non-transitory, physical, and/or tangible storage medium. In some embodiments, a computer-readable medium may take many forms, including, but not limited to, non-volatile media, volatile media, or the like. Non-volatile media includes, for example, optical and/or magnetic disks, such as the storage device(s) 525. Volatile media includes, without limitation, dynamic memory, such as the working memory 535. In some alternative embodiments, a computer-readable medium may take the form of transmission media, which includes, without limitation, coaxial cables, copper wire, and fiber optics, including the wires that comprise the bus 505, as well as the various components of the communication subsystem 530 (and/or the media by which the communications subsystem 530 provides communication with other devices). In an alternative set of embodiments, transmission media can also take the form of waves (including, without limitation, radio, acoustic, and/or light waves, such as those generated during radio-wave and infra-red data communications).

Various forms of computer-readable media may be involved in carrying one or more sequences of one or more instructions to the processor(s) 510 for execution. Merely by way of example, the instructions may initially be carried on a magnetic disk and/or optical disc of a remote computer. A remote computer might load the instructions into its dynamic memory and send the instructions as signals over a transmission medium to be received and/or executed by the computer system 500. These signals, which might be in the form of electromagnetic signals, acoustic signals, optical signals, and/or the like, are all examples of carrier waves on which instructions can be encoded, in accordance with various embodiments of the invention.

The communications subsystem 530 (and/or components thereof) generally receives the signals, and the bus 505 then might carry the signals (and/or the data, instructions, etc. carried by the signals) to the working memory 535, from which the processor(s) 510 retrieves and executes the instructions. The instructions received by the working memory 535 may optionally be stored on a storage device 525 either before or after execution by the processor(s) 510.

While some features and aspects have been described with respect to the embodiments, one skilled in the art will recognize that numerous modifications are possible. For example, while various methods and processes described herein may be described with respect to particular structural and/or functional components for ease of description, methods provided by various embodiments are not limited to any particular structural and/or functional architecture but instead can be implemented in any suitable hardware configuration. Similarly, while some functionality is ascribed to one or more system components, unless the context dictates otherwise, this functionality can be distributed among various other system components in accordance with the several embodiments.

Moreover, while the procedures of the methods and processes described herein are described in a particular order for ease of description, unless the context dictates otherwise, various procedures may be reordered, added, and/or omitted in accordance with various embodiments. Moreover, the procedures described with respect to one method or process may be incorporated within other described methods or processes; likewise, system components described according to a particular structural architecture and/or with respect to one system may be organized in alternative structural architectures and/or incorporated within other described systems. Hence, while various embodiments are described with or without some features for ease of description and to illustrate aspects of those embodiments, the various components and/or features described herein with respect to a particular embodiment can be substituted, added and/or subtracted from among other described embodiments, unless the context dictates otherwise. Consequently, although several embodiments are described above, it will be appreciated that the invention is intended to cover all modifications and equivalents within the scope of the following claims.

## Claims

1. An apparatus comprising:
one or more ingress points (IPa - IPn) configured to receive one or more packets, each packet comprising a respective one or more cells;
a traffic manager (115) configured to obtain the one or more packets from a buffer, wherein the traffic manager (115) comprises:
a first storage configured to store one or more pointers associated with a packet of the one or more packets, the one or more pointers comprising a first type of pointer and a second type of pointer;
a second storage configured to store the respective cell control information of at least part of the one or more cells of the packet, wherein the cell control information includes a respective first type of pointer for each of the at least part of the one or more cells,
wherein the first type of pointer references an address of a location in the buffer where a respective cell of the at least part of the one or more cells is stored,
wherein the second type of pointer references an address of a location of the cell storage;
admission control logic (125) configured to perform an admission check of the one or more packets without the cell control information of the one or more packets, wherein performing the admission check includes determining whether a packet in the buffer should be admitted into a first queue.

2. The apparatus of claim 1, wherein the traffic manager (115) is further configured to group the one or more packets into one or more blocks of packets, the one or more blocks of packets including a first block of one or more first packets and a second block of one or more second packets.

3. The apparatus of claim 2, wherein the one or more first packets of the first block are grouped together based, at least in part, on a destination port of the one or more first packets.

4. The apparatus of claim 3, wherein the traffic manager (115) is further configured to group two or more blocks of the one or more blocks to form a third block.

5. The apparatus of any of claims 2 to 4, wherein the admission control logic (125) is configured to complete the admission check of each of the one or more first packets of the first block before performing the admission check of the one or more second packets of a second block;
in particular wherein the first block includes a first set of first packets having a first priority and a second set of first packets having a second priority, wherein the admission control logic (125) is configured to perform the admission check based at least in part on a priority of a respective first packet and fullness of the first queue.

6. The apparatus of any of claims 1 to 5, wherein the first storage includes a first control queue having a first number of entries, and the second storage includes a second control queue having a second number of entries, wherein the second number of entries is equal to a total number of cells of the one or more cells of the packet.

7. A network device comprising:
one or more ingress points (IPa - IPn) configured to receive one or more packets, each packet comprising a respective one or more cells;
a memory management unit (110) comprising:
a traffic manager (115) configured to obtain the one or more packets from a buffer, wherein the traffic manager (115) comprises:
a packet storage configured to store one or more pointers associated with a packet of the one or more packets, the one or more pointers comprising a first type of pointer and a second type of pointer;
a cell storage configured to store cell control information of at least part of the one or more cells of the packet, wherein the cell control information includes a respective first type of pointer for each of the at least part of the one or more cells,
wherein the first type of pointer references an address of a location in the buffer where a respective cell of the at least part of the one or more cells is stored,
wherein the second type of pointer references an address of a location of the cell storage;
admission control logic (125) configured to perform an admission check of the one or more packets without the cell control information of the one or more packets, wherein performing the admission check includes determining whether a packet in the buffer should be admitted into an output queue.

8. The network device of claim 7, wherein the traffic manager (115) is further configured to group the one or more packets into one or more blocks of packets, the one or more blocks of packets including a first block of one or more first packets and a second block of one or more second packets.

9. The network device of claim 8, wherein the one or more first packets of the first block are grouped together based, at least in part, on a destination port of the one or more first packets;
in particular wherein the traffic manager (115) is further configured to group two or more blocks of the one or more blocks to form a third block.

10. The network device of claim 8 or 9, wherein the admission control logic (125) is configured to complete the admission check of each of the one or more first packets of the first block before performing the admission check of the one or more second packets of a second block;
in particular wherein the first block includes a first set of first packets having a first priority and a second set of first packets having a second priority, wherein the admission control logic (125) is configured to perform the admission check based at least in part on a priority of a respective first packet and fullness of the first queue.

11. The network device of any of claims 7 to 10, wherein the first storage includes a first control queue having a first number of entries, and the second storage includes a second control queue having a second number of entries, wherein the second number of entries is equal to a total number of cells of the one or more cells of the packet.

12. A memory management unit (110) comprising:
a traffic manager (115) to obtain one or more packets from a buffer, each packet comprising a respective one or more cells, wherein the traffic manager (115) comprises:
a packet storage configured to store one or more pointers associated with a packet of the one or more packets, the one or more pointers comprising a first type of pointer and a second type of pointer;
a cell storage configured to store cell control information of at least part of the one or more cells of the packet, wherein the cell control information includes a respective first type of pointer for each of the at least part of the one or more cells,
wherein the first type of pointer references an address of a location in the buffer where a respective cell of the at least part of the one or more cells is stored,
wherein the second type of pointer references an address of a location of the cell storage;
admission control logic (125) configured to perform an admission check of the one or more packets without the cell control information of the one or more packets, wherein performing the admission check includes determining whether a packet in the buffer should be admitted into an output queue.

13. The memory management unit (110) of claim 12, wherein the traffic manager (115) is further configured to group the one or more packets into one or more blocks of packets, the one or more blocks of packets including a first block of one or more first packets and a second block of one or more second packets.

14. The memory management unit (110) of claim 13, wherein the one or more first packets of the first block are grouped together based, at least in part, on a destination port of the one or more first packets;
in particular wherein the traffic manager (115) is further configured to group two or more blocks of the one or more blocks to form a third block.

15. The memory management unit (110) of claim 13 or 14, wherein the admission control logic (125) is configured to complete the admission check of each of the one or more first packets of the first block before performing the admission check of the one or more second packets of a second block;
in particular wherein the first block includes a first set of first packets having a first priority and a second set of first packets having a second priority, wherein the admission control logic (125) is configured to perform the admission check based at least in part on a priority of a respective first packet and fullness of the first queue.
